# EUROPÄISCHE PATENTSCHRIFT

(11) **EP 4 291 794 B1**
(45) Veröffentlichungstag und Bekanntmachung des Hinweises auf die Patenterteilung: **24.09.2025**
(21) Anmeldenummer: 22708310.2
(22) Anmeldetag: 07.02.2022
(51) Int. Cl.: F16D 3/06, F16D 3/12, F16D 3/64

(54) **KARDANISCH WEICHE KUPPLUNG ZUR ÜBERTRAGUNG VON HOHEN AXIALEN KRÄFTEN FÜR TRIEBSTRÄNGE IN WINDKRAFTANLAGEN**
CARDANICALLY FLEXIBLE COUPLING FOR TRANSMITTING HIGH AXIAL FORCES FOR DRIVE TRAINS IN WIND TURBINES
ACCOUPLEMENT SOUPLE À CARDAN PERMETTANT DE TRANSMETTRE DES FORCES AXIALES ÉLEVÉES POUR DES TRANSMISSIONS DANS DES ÉOLIENNES

(30) Priorität: 09.02.2021 EP 21020063
(43) Veröffentlichungstag der Anmeldung: 20.12.2023
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2022/025044
(87) Internationale Veröffentlichungsnummer: WO 2022/171363

(56) Entgegenhaltungen:
- EP-A1- 2 895 768
- EP-A1- 3 012 479
- EP-B1- 2 895 768
- WO-A1-2010/054808

## Beschreibung

Die Erfindung betrifft ein Maschinenbauteil, welches vorzugsweise für Triebstränge für angetriebene Anlagen vorgesehen ist und die Funktion einer kardanisch weichen Kupplung bei gleichzeitiger hoher Torsionssteifigkeit besitzt und in der Lage ist, hohe axial auf die Anlage einwirkende Kräfte aufzunehmen. Damit ist es möglich, andere Teile der Anlage zu entlasten. Die besondere Funktionalität dieser Kupplungen wird insbesondere durch den Einsatz speziell ausgestatteter und ausgerichteter Hydraulikfedern erreicht.

Die Erfindung betrifft insbesondere Treibstränge für Windkraftanlagen, die mit einer entsprechenden erfindungsgemäßen Kupplung ausgestattet sind, um insbesondere die hohen axialen Kräfte, welche entlang der Rotorwelle und auf das Rotorlager einwirken, auf weitere Maschineteile so zu verteilen, dass wiederum andere Maschinenteile, wie z.B. das Getriebe, möglichst kräftefrei bleiben.

In Systemen mit angetriebenen Bauteilen, wie Windkraftanlagen, treten auch Kräfte auf, die unerwünscht sind und Bauteile beschädigen oder zerstören können. Diese können applikationsbedingt oder auch systemimmanent sein.

Insbesondere in Windkraftanlagen treten neben üblichen Maschinenantriebskräften auch durch Windeinfluss bedingte Belastungen auf. Durch teilweise stark unregelmäßige Windstärken oder -richtungen oder durch andere Sonderereignisse können erhebliche Zug-, Druck- und Querkräfte in Hauptwelle, Hauptlager, Maschinenrahmen und Antriebstrang eingeleitet werden. Derartige Zwangskräfte im Antriebstrang einer Anlage können zu schweren Beschädigungen an Lagern und weiteren kraftführenden Teilen des Antriebsstrangs einer Windkraftanlage führen.

Um dies zu vermeiden oder die Belastungen zu minimieren, werden im Stand der Technik häufig elastische Kupplungen zur Übertragung von Drehmomenten, beispielsweise aus dem Rotor oder dem Getriebe, eingesetzt. Kupplungen, welche kreisförmig am Umfang der Kupplungsscheiben angeordnete elastische Buchsen aufweisen, sind nach dem Stand der Technik eine Möglichkeit, dem Problem zu begegnen. Kupplungen mit axial zum Antriebsstrang ausgerichteten elastischen Buchsen sind in radialer Richtung deutlich steifer als in axialer Richtung (Faktor 10 bis 100). Damit weisen sie bei einer großen Torsionssteifigkeit auch eine geringe kardanische Steifigkeit auf, was in der Regel gewünscht ist. Jedoch sind derartige elastische Buchsen auch in axialer Richtung wenig steif, so dass sie nur kleine Axialkräfte übertragen können. Für den Antriebsstrang einer Anlage, welcher hohe axiale Kräfte zu übertragen hat, wie insbesondere bei einer Windkraftanlage, sind derartige reine Buchsen-Kupplungen weniger geeignet.

Im Stand der Technik werden hierfür diverse Lösungen beschrieben. In der EP 1 593 867 B1 wird eine Kupplung beschrieben, welche durch Verspannen von zwei gegeneinander liegenden Konuselementen gebildet wird. Die Kraftübertragung in axialer Richtung erfolgt bei diesem Doppel-Konuslager vom Getriebeflansch zum Maschinenträger über die beiden diametral verspannten Konuslager, welche durch Kegelstücke fliegend gelagert und vorgespannt sind. Die WO 2010/054808 beschreibt ein Maschinen-/Getriebelager zur Übertragung von axial und radial auftretenden Kräften und Momenten, welches ein axial ausgerichtetes elastomeres Sandwichelement und ein oberhalb oder unterhalb davon angebrachtes elastomeres Konuselement umfasst, dessen Achse senkrecht zu dem Sandwichelement ausgerichtet ist und dessen verjüngtes Ende gegenüber diesem Sandwichelement positioniert ist, wobei die die beiden Teile durch ein zweites Konuselement und ein Zylinderstück miteinander in Verbindung stehen, und jedes der Elemente eine zentrische axial ausgerichtete Bohrung aufweisen zur Aufnahme von Spannmitteln.

EP 3 012 479 A1 beschreibt eine weitere aus dem Stand der Technik bekannte Kupplung.

Die damit erreichte größere axiale Steifigkeit hat natürlich auch eine größere kardanische Steifigkeit zur Folge, was für bestimmte Anwendungen nicht wirklich gewünscht ist. Überdies stoßen die Lösungen des zitierten Standes der Technik bei sehr hohen Axialkräften, wie sie gerade bei den heute sehr großen Windkraftanlagen auftreten, an ihre Grenzen. Überdies benötigen sie relativ viel Platz und eignen sich daher weniger in solchen Anlagen, bei dem dies ein Problem ist.

Es bestand somit die Aufgabe, eine Kupplungs- oder diesbezüglich wirkende Lagervorrichtung für einen Triebstrang insbesondere einer Windkraftanlage zur Verfügung zu stellen, welche neben einer hohen Axial- und Torsionssteifigkeit auch gelichzeitig eine geringe kardanische Steifigkeit aufweist.

Die Aufgabe wurde gelöst durch eine Kupplungs- und/oder Lagervorrichtung, welche eine Kombination aus einer Anordnung von axial ausgerichteten, radial steifen Federelementen (z.B. elastische Buchsen) mit einer Anordnung von axial angeordneten, bzw. axial wirksamen elastischen Hydraulikelementen bereitstellt.

Gegenstand der Erfindung ist somit eine Kupplung zur Übertragung von Drehmomenten und hohen axialen Kräften mit hoher Torsions- und geringer kardanischen Steifigkeit, umfassend ein erstes Maschinenbauteil, auf welches eine von außen eingeleitete Kraft und/oder ein Drehmoment einwirkt, und ein zweites feststehendes Maschinenbauteil, auf welches die Kraft und/oder das Drehmoment aus dem Maschinenbauteil übertragen wird.

Dabei sind die beiden Maschinenbauteile rotationssymmetrisch bezüglich einer gedachten gemeinsamen Achse und weisen eine zentrale Bohrung zur Aufnahme einer Welle auf, über welche die Krafteinleitung, beispielsweise vom Rotorschub einer Windkraftanlage, erfolgt.

Die besagten Maschinenbauteile sind durch Federelemente miteinander verbunden, wobei die Federelemente verschiedenartig ausgestattet und verschiedenartig angeordnet sein können, um unterschiedlich gerichtete und unterschiedlich starke Kräfte zu übertragen und aufzunehmen.

Erfindungswesentlich ist dabei, dass die beschriebenen Kupplungen nun zusätzlich zu den an sich üblichen beschriebenen Federelementen elastische Hydraulikfedern aufweisen, welche mittels geeigneter Befestigungsmittel mit den ersten und zweiten Maschinenbauteilen verspannt sind.

Erfindungsgemäß weisen die besagten Maschinenbauteile somit eine Vielzahl erste Hydraulikfedern auf, welche so angeordnet und zumindest mit dem ersten Maschinenbauteil unter Verwendung von Verbindungs- und Spannmitteln funktionell verbunden sind, dass eine axiale Zugkraft auf das erste Maschinenbauteil in Bezug auf das zweite feststehende Maschinenbauteil ausgeübt bzw. übertragen werden kann.

Erfindungsgemäß weisen die besagten Maschinenbauteile außerdem eine Vielzahl zweite Hydraulikfedern auf, welche so angeordnet und zumindest mit dem zweiten Maschinenbauteil funktionell verbunden sind, dass eine axiale Druckkraft auf das erste Maschinenbauteil in Bezug auf das zweite feststehende Maschinenbauteil ausgeübt bzw. übertragen werden kann.

Die Maschinenbauteile der erfindungsgemäßen Kupplung werden vorzugsweise von zwei rotationssymmetrischen Scheiben oder Flanschstücken gebildet, die gegenüber angeordnet und gegeneinander verspannt sind, wobei eines der Maschinenbauteile fest mit einer geeigneten Trägerstruktur der Anlage verbunden ist.

Vorzugsweise besitzen die Scheiben oder Flansche eine zentrale Bohrung zur Aufnahme einer drehbaren durchgehenden oder angeflanschten Welle. Diese Welle bildet die Achse der Kupplung und über diese Welle erfolgt die Einleitung von axialen, radialen und Torsionskräften, welche auf das erfindungsgemäße Kupplungsteil übertragen werden.

Erfindungsgemäß ist eine Buchsen-Kupplung vorgesehen. Hierbei weisen die Scheiben oder Flanschstücke eine Vielzahl von axialen Bohrungen oder Vertiefungen zur Aufnahme von einer Vielzahl von elastischen Buchsen funktionell vorzugsweise auf. Die Bohrungen sind vorzugsweise gleichmäßig am Umfang verteilt. Die elastischen Buchsen sind entweder in einer der beiden scheibenförmigen Maschinenbauteilen untergebracht und haben durch Verbindungs- und Spannmittel Presskontakt mit dem zweiten gegenüberliegenden Maschinenbauteil. In einer bevorzugten Ausführungsform der Erfindung kann in diesem Fall zur Vergrößerung der Kontaktfläche zwischen Buchse und Maschinenbauteil eine entsprechend dimensionierte Scheibe mit einem erhöhten Reibungswiderstand vorgesehen werden.

In einer aufwendigeren Ausführungsform ist ein vorzugsweise zylindrisches Endstück der elastischen Buchsen in durchgehende Bohrungen des ersten scheibenförmigen Maschinenbauteils untergebracht, und das andere zylindrische oder konische Endstück der Buchsen ist passgenau in eine zylindrische oder konische Bohrung oder Vertiefung des zweiten gegenüberliegenden und mit dem ersten verspannten Maschinenbauteils versenkt. Die elastischen vorzugsweise runden Buchsen, welche also zur Achse der Kupplung oder Lagerung parallel also axial ausgerichtet und so gestaltet sind, dass sie eine um mindestens 10-fache, vorzugsweise um mindestens 100-fache radiale Steifigkeit im Vergleich zur axialen Steifigkeit aufweisen, sind beispielsweise aus abwechselnden parallelen vorzugsweise zylindrischen Schichten aus Gummi/Elastomer und Metall/Blech um einen zylindrischen festen innenkern aufgebaut, so wie sie im Stand der Technik an sich bekannt sind. Die Buchsen können auch konische Endstücke aufweisen, mit denen sie in die Bohrungen der scheibenförmigen Maschinenbauteile hineinragen.

In einem nicht erfindungsgemäßen Beispiel können die besagten Maschinenbauteile (Scheiben) auch als Paketkupplung gestaltet sein, wie sie im Stand der Technik an sich beschrieben sind. Hierbei liegen die umlaufenden Federelemente nicht als elastische Buchsen, sondern in Form von elastischen Schichtfederelementen vor, während die Maschinenbauteile als sternförmige Scheiben ausgebildet sind. Die beiden Scheiben sind dabei über Nocken an den sternförmigen Armen, zwischen denen besagte elastische Schichtfederelemente angeordnet sind, miteinander verzahnt.

Zusätzlich zu den besagten am Umfang der Maschinenbauteile verteilt angeordneten Federelementen (z.B. elastische Buchsen oder die Schichtfedern von Paketkupplungen) umfassen die erfindungsgemäßen Kupplungen zwei, drei, vier, fünf, sechs oder mehr Paare von ersten Hydraulikfedern und zweiten Hydraulikfedern, welche an, auf oder zwischen den scheibenförmigen Maschinenbauteilen angeordnet sein können.

Dabei sind erfindungsgemäß die ersten Hydraulikfedern eines jeden Paares so angeordnet und mindestens mit dem ersten Maschinenbauteil mittels Verbindungs- und Spannmitteln funktionell so verbunden sind, dass sie eine axiale Zugkraft auf das erste Maschinenbauteil in Bezug auf das zweite Maschinenbauteil ausüben bzw. übertragen können.

Demgegenüber sind die zweiten Hydraulikfedern erfindungsgemäß so angeordnet und mindestens mit dem Maschinenbauteil mittels von Verbindungs- und Spannmitteln funktionell so verbunden sind, dass sie eine axiale Druckkraft auf das schiebenförmige Maschinenbauteil in Bezug auf das Maschinenbauteil ausüben bzw. übertragen können.

Die Befestigung und Verspannung der erfindungsgemäßen ersten und zweiten Hydraulikfedern erfolgt durch entsprechende Bohrungen in dem ersten und/oder zweiten Maschinenbauteil.

Im Falle einer Buchsen-Kupplung können vorteilhafterweise auch Bohrungen für die Befestigungsmittel der elastischen Buchsen verwendet werden. In diesem Fall wird idealerweise eine Hydraulikfeder, bzw. ein Paar von Hydraulikfedern zwischen zwei benachbarte Buchsen auf einem der beiden Maschinenbauteile positioniert und über die Bohrungen besagter benachbarter Buchsen mit dem anderen Maschinenbauteil verspannt.

Es sind prinzipiell jedoch auch andere Anordnungen und Befestigungen möglich, sofern sie für die funktionelle Aufgabe der Hydraulikfedern geeignet sind. So können auch separate Bohrungen in einem der beiden oder beiden Maschinenbauteilen zusätzlich zu den Bohrungen für die elastischen Buchsen für die Verspannung der Hydraulikfederelemente vorgesehen werden. Es ist auch möglich unterschiedlich große und damit in ihrer Zug-/Druckkraft unterschiedlich wirksame Hydraulikfedern einzusetzen.

Es ist prinzipiell möglich die Hydraulikfedern auf einer Scheibe oder Flansch anzubringen oder verteilt auf beide Scheiben oder Flansche oder zwischen diesen. Weiterhin kann ein einzelnes Paar aus Druck- und Zug-Hydraulikfedern aus nebeneinander oder übereinander oder getrennt angeordneten Hydraulikfedern gebildet werden.

Die Hydraulikfedern sind also so angeordnet, dass sie in axialer Richtung, also in Richtung der Welle, wirksam sind, wobei ein Teil der Hydraulikfedern so ausgerichtet ist, dass sie für eine Druck- oder Zug Belastung in axialer Richtung, und der andere Teil der Hydraulikfedern für eine Druck- oder Zug Entlastung in axialer Richtung sorgen. In der Regel sind gleich viele Paare von Hydraulikfedern für die Belastung und die Entlastung vorgesehen.

Die erfindungsgemäßen Hydraulikfedern sind wie die umlaufenden Federelemente der Buchsen- oder Paketkupplung mit üblicherweise kleinerem Radius am Umfang der scheibenförmigen Maschinenbauteile vorzugsweise gleichmäßig verteilt, wobei mindestens zwei Hydraulikfedern für die Druck-Zug-Belastung und mindestens zwei Hydraulikfedern für die Druck-Zug-Entlastung vorzusehen sind. Zwei Paare von Hydraulikfedern können eine unsymmetrische kardanische Steifigkeit bewirken, was aber unter bestimmten Umständen erwünscht sein kann. Vorzugsweise werden drei Paare von Hydraulikfedern vorgesehen. Selbstverständlich können bei Bedarf auch mehr als drei (Paare von) Hydraulikfedern, also auch vier, fünf, sechs oder mehr zum Einsatz kommen. Auch nur zwei Paare von Hydraulikfedern, die vorzugsweise gegenüber angeordnet sind, können bereits die gewünschten Dämpfungseigenschaften der Kupplung erbringen.

Die Hydraulikfedern der axialen Belastung sind miteinander über Hydraulik-Leitungen oder - Schläuche verbunden, ebenso wie die Hydraulikfedern, welche für die Entlastung in axialer Richtung zuständig sind. Der Hydraulikbetrieb führt zu Reibungskräften in den Leitungen und bewirkt zusätzlich eine Dämpfung des Systems, insbesondere in Nick- und Gier-Richtung von Windkraftanlagen. Durch die Anordnung der Verbindungsschläuche ist das aus den axialen Hydraulikelementen bestehende System nur in axialer Richtung steif. In kardanischer Richtung ist es hingegen leicht verformbar.

Die Hydraulikfedern bestehen im Wesentlichen aus Schichtfederelementen, die aus elastischen Schichten und unflexiblen Metallschichten aufgebaut sind und hydraulisch gepresst oder entspannt werden können. Um die entsprechende Wirksamkeit in axialer Richtung zu garantieren, müssen die Flächen der Schichtfederelemente in einem 90°-Winkel zur Kupplungsachse, bzw. zur Welle der Kupplung, also senkrecht hierzu, angeordnet sein.

Auf das Kupplungsbauteil wirken bei Belastung, beispielsweise initiiert über die Welle, bzw. entlang der Achse, übertragbare Kräfte ein, welche je nach Hauptrichtung der Kraft Zugkräfte oder Druckkräfte sind. Da die elastischen Buchsen in dieser Anordnung eine geringe axiale Steifigkeit haben, besitzt das an die Kupplung angeschlossene System bezüglich der Richtung der Achse auch eine geringe kardanische Steifigkeit auf, ist also kardanisch noch gut beweglich.

Generell kann die Anzahl der Hydraulikelemente als auch der anderen Federelemente der Baugröße und den vorgesehenen Drehmomenten angepasst werden. So können erfindungsgemäß mindestens zwei Paare von Hydraulikfedern und acht bis 32 Federelemente (z.B. elastische Buchsen) vorgesehen werden. Bei Bedarf ist es möglich, vier, fünf, sechs oder mehr derartiger Paare von Hydraulikfedern einzusetzen. Weiterhin ist es auch bei bestimmten Erfordernissen denkbar, Paare von Hydraulikfedern ungleichmäßig auf den Scheiben zu verteilen, oder ungleich viele Hydraulikfedern für Belastung und Entlastung einzusetzen.

In den unten erläuterten Ausführungsformen der Erfindung sind beispielsweise 24 Elastomerbuchsen am Umfang der Scheiben angeordnet. Dadurch kann erfindungsgemäß das kardanischen Rückstellmoment klein gehalten werden. Vorzugsweise werden die Hydraulikfedern zur guten Zugänglichkeit auf das feste Bauteil (zum Beispiel Maschinenträger) aufgesetzt.

Die angreifenden Kräfte, einschließlich des Drehmoments werden erfindungsgemäß aus dem ersten Maschinenbauteil auf das feste zweite Maschinenbauteil übertragen. Wie bereits an anderer Stelle erwähnt, dient die erste Hydraulikfeder zur Übertragung von Zugkräften vom ersten Maschinenbauteil auf das zweite feststehende Maschinenbauteil, wobei die Druck-Kraftübertragung über Verbindungs- und Spannelemente auf die das erste Maschinenbauteil erfolgt. Demgegenüber werden die Druckkräfte über die zweiten Hydraulikelemente mittels weiterer Verbindungs- und Spannelemente vom ersten Maschinenbauteil auf das feststehende Bauteil übertragen.

Wie bereits gesagt, eigenen sich die beschriebenen ersten und zweiten Hydraulikfedern auch besonders für den Einsatz in Paketkupplungen. Die Welle einer solchen Paketkupplung ist damit in der Lage, axiale, radiale Kräfte als auch Antriebs-Momente zu übertragen.

Die erfindungsgemäßen Kupplungen können um ihre Achse rotierend oder feststehend eingesetzt werden.

Gegenstand der Erfindung ist weiterhin ein Triebstrang für eine Windkraftanlage, welche mit einer Rotorwelle, einem Rotorlager, einem Getriebelager, einem Getriebegehäuse und einem Maschinenträger ausgestattet ist, wobei der Triebstrang, welcher den Rotor über die Rotorwelle mit dem Getriebe verbindet, eine Kupplungs- oder Flanschanordnung wie beschrieben aufweist.

In einer Ausführungsform der Erfindung ist die Kupplungs- oder Flanschanordnung im Bereich des Getriebelagers angeordnet. Dabei kann vorgesehen werden, dass das erste vorzugsweise scheibenförmige Maschinenbauteil mit dem Getriebegehäuse und das zweite vorzugsweise scheibenförmige Maschinenbauteil mit dem Maschinenträger verbunden ist.

Durch eine solche oder eine ähnliche erfindungsgemäße Anordnung ist es zum Beispiel möglich, dass das Rotorlager einer Windkraftanlage weitgehend befreit werden kann von axialen Kräften und nur noch radiale Kräfte aufnehmen muss. Die zum Teil erheblichen axialen Kräfte, die über den Rotor und die Rotorblätter, insbesondere unter Extrembedingungen eingetragen werden, können nun über die erfindungsgemäße Kupplungsanordnung auf andere stabile Bereiche, beispielsweise auf den Maschineträger oder auf das Getriebegehäuse umgeleitet und dort aufgenommen werden.

Gegenstand der Erfindung ist letztlich auch eine Windkraftanlage, welche eine Kupplung, einen Flansch oder ein Lager oder als Teil eines Triebstranges, wie oben und in den Ansprüchen beschrieben, umfasst.

Im Folgenden wird die Erfindung anhand der beigefügten Abbildungen näher erläutert.

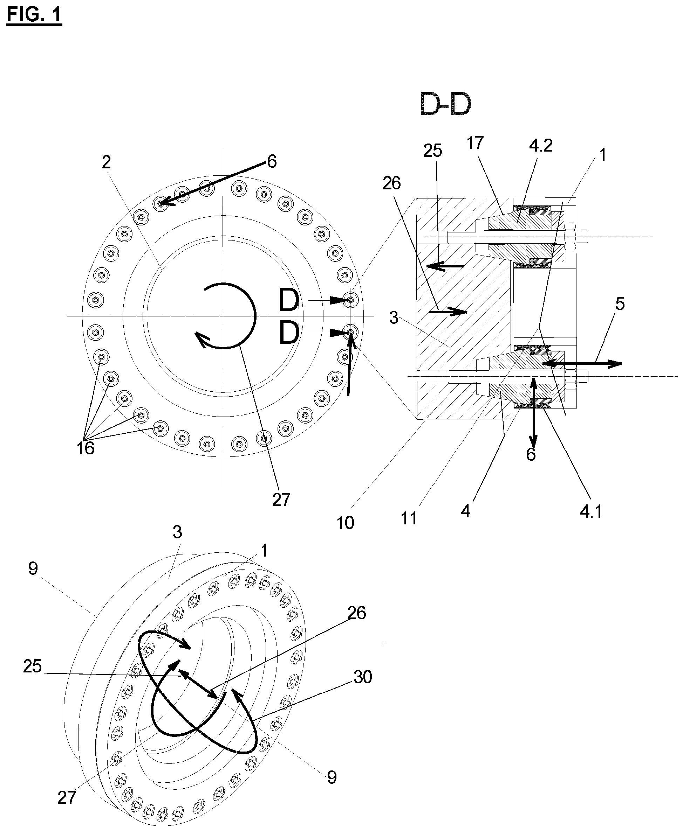

FIG. 1 zeigt eine typische Buchsen-Kupplung des Standes der Technik in verschiedenen Ansichten. Eine erste Scheibe (2) ist über eine Vielzahl von hier gleichmäßig am Umfang verteilten Buchsen (4) mit einer zweiten Scheibe (3) verbunden. Dazu sind axial ausgerichtete Bohrungen sowohl in der runden Platte (2) als auch in der runden Platte (3) vorgesehen. Die Teile werden mit Spannmitteln, beispielsweise Verschraubungen, gegeneinander verspannt. Die Scheiben (2)(3) haben eine gemeinsame Achse (9) durch ihren Mittelpunkt. Durch diesen Mittelpunkt entlang der Achse ist eine kreisförmige Öffnung vorgesehen zur Aufnahme einer Welle (22) (nicht gezeigt). Über die Welle (22) kann ein Drehmoment (27) ausgeübt werden.

Die Buchsen (4) sind somit ebenfalls radial um den Mittelpunkt verteilt, sind aber axial zur Achse (9) angeordnet. Die gezeigten Buchsen bestehen aus einen festen Innenteil (4.2) und einem diesen umgebenden elastischen Außenteil (4.1). Der elastische Teil kann auch aus abwechselnden Schichten aus Elastomer und Metall bestehen, wie dies im Stand der Technik bereits beschrieben wurde.

Im gezeigten Beispiel dient die Scheibe (3) zur Krafteinleitung während die Scheibe (2) die Kraft aufnimmt. Auf die Buchsen (4) wird bei Belastung / Verspannung eine axiale Kraft (5) sowie eine radiale Kraft (6) ausgeübt. Wie bereits erwähnt, können durch diese übliche Buchsen-Geometrie und - Anordnung wesentlich größere Kräfte in radialer Richtung als in axialer Richtung übertragen und aufgenommen werden (etwa Faktor 10 bis 100).

Die perspektivische Ansicht unten links stellt zudem die insgesamt einwirkenden Kräfte durch Pfeile dar. Dabei sind (25) (26) axiale (nach außen und innen wirksame) Kräfte, (27) entspricht dem Drehmoment und (30) entspricht der kardanische wirkenden Kraft,

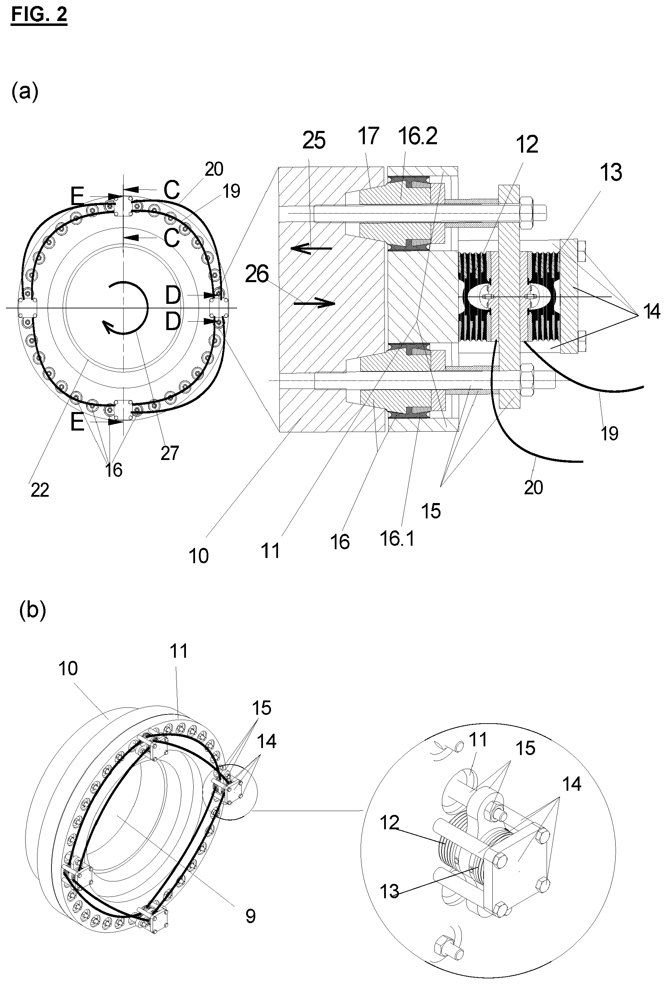

Fig. 2 zeigt eine erste Ausführungsform gemäß der vorliegenden Erfindung wiederum in verschiedenen Ansichten (a) - (f).
(a) stellt eine Draufsicht auf die vordere Kupplungsscheibe (11) dar. Diese entspricht im Aufbau der Kupplungsscheibe (2) aus Fig. 1.

Zahlreiche Buchsen (16) sind am Umfang des Bauteils angebracht parallel zur Achse (9). Die Buchsen entsprechen im Aufbau denen der Figur 1, bestehen somit aus einen festen Innenteil (16.2) und einem diesen umgebenden elastischen Außenteil (16.1). Durch den Mittelpunkt der Kupplungsscheiben ist eine Welle (22) geführt, auf die ein Drehmoment (27) ausgeübt werden kann.

An vier Positionen, oben und unten, links und rechts, der Kupplungsscheibe (11) sind erfindungsgemäß Hydraulikfedern (12)(13), im gezeigten Fall übereinander angeordnet, angebracht.
(b) zeigt als Ausschnitt in vergrößerter Seitenansicht die erfindungsgemäße Konstruktion und Anordnung von zwei Hydraulikfedern (12)(13), welche als Paar übereinander angebracht sind. Im gezeigten Beispiel ist die Anordnung so gewählt, dass die Hydraulikfeder (12) eine Zugkraft (26) in Bezug auf die Scheibe (10) ausübt und so für eine Entlastung gegenüber der Scheibe (11) sorgt. Umgekehrt sorgt die Hydraulikfeder (13) für eine Druckkraft (25) auf die Scheibe (10), wodurch eine Belastung gegenüber der Scheibe (11) bewirkt wird. Aus der gezeigten Ausführungsform ist ersichtlich, dass die Hydraulikfeder (12) über jene Bohrungen mit der Scheibe (10) mittels von Verbindungs- und Spannmitteln (15) verspannt ist, welche auch von zwei benachbarten elastischen Buchsen (16) verwendet werden, während die Hydraulikfeder (13) über eigene Verbindungs- und Spannmittel (14) an der festen Scheibe (11) befestigt ist. Der Hydraulikdruck wird über eine Hydraulik-Druckleitung (19), die mit der Hydraulikfeder (13) verbunden ist, und eine Hydraulikleitung (20), welche mit der Hydraulikfeder (12) verbunden ist, reguliert.

Der Ausschnitt zeigt weiterhin zwei benachbarte elastische Buchsen (16), welche die gleichen Spannmittel benutzen wie die zwischen ihnen angeordnete Hydraulikfeder (12). Die Buchsen (16) weisen in dieser Ausführungsform einen festen Kern (16.2) auf, der mit seinem einem kegeligen Ende in eine entsprechend geformte Vertiefung (17) in der Kupplungsscheibe (10) gelagert bzw. gepresst ist. Mit der Kupplungsscheibe (11) sind die Buchsen (16) über ihre elastische Schicht (16.1) verbunden.
(c) und (d) zeigen zwei Ansichten der Ausführungsform gemäß (a) und (b) nun unter Berücksichtigung der Anordnung und Verbindungen der Hydraulikleitungen (19) und (20). Dabei stehen alle vier Hydraulikfedern (13) durch Hydraulikleitungen (19) und alle vier Hydraulikfedern (12) durch Hydraulikleitungen (20) druckmäßig miteinander in Verbindung.
(e) und (f) zeigen weitere Details der hier beschriebenen erfindungsgemäßen Ausführungsform. Insbesondere aus dem vergrößerten Ausschnitt (f) ist gut erkennbar, wie in dieser Ausführungsform die beiden Hydraulikfedern (12) und (13) mit den Kupplungsscheiben (10) und (11) verbunden sind.

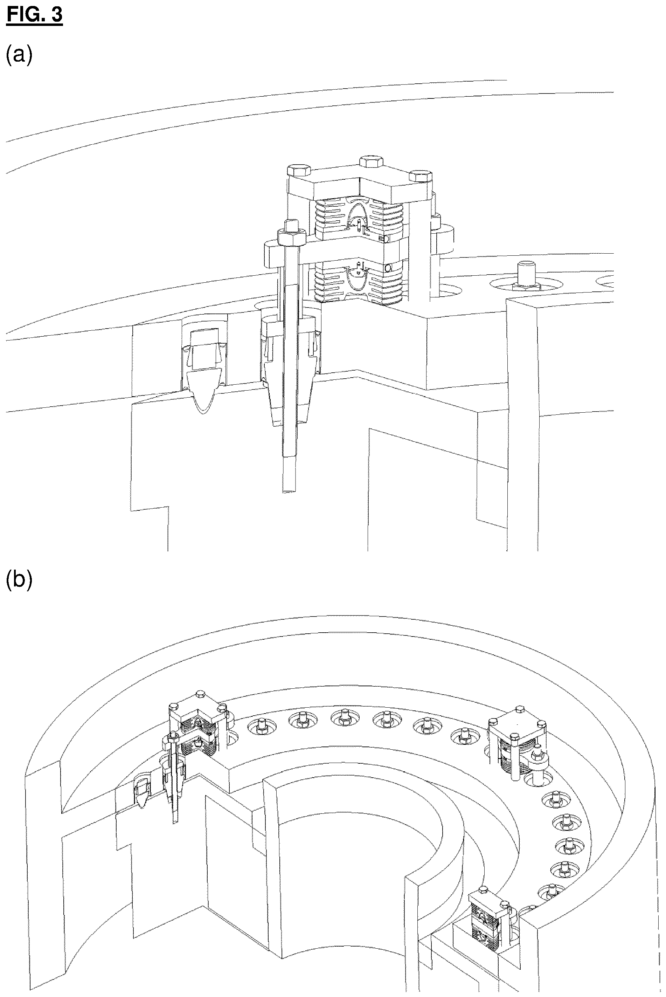

Fig. 3 (a)(b) zeigt zwei 3D -Ansichten der erfindungsgemäßen Kupplung in der Ausführungsform der Fig. 2.
(a) zeigt einen vergrößerten Ausschnitt jenes Teils der Kupplung, welcher der Fig. 2 (b) entspricht (nun um 90° verdreht). Die obere Hydraulikfeder (13) ist mit ihren Verbindungs- und Spannmitteln (14) direkt an der Scheibe (11) befestigt. Sie lagert auf einer Deckplatte, welche zusammen mit der darunter angeordneten Hydraulikfeder (12) mit der unter der Scheibe (11) angeordneten Scheibe (10) mittels zweier Spannschrauben (15) verspannt ist. Die Spannschrauben Hydraulikfeder (12) werden hier erfindungsgemäß durch Bohrungen in zwei benachbarten elastischen Buchsen (16) geführt und sind mit der darunterliegenden Scheibe (10) verschraubt. Die elastischen Buchsen (16) selbst sind in passgenaue zylindrische Bohrungen der oberen Kupplungsscheibe (11) eingelassen. Mit ihrem unteren Ende, welches länger ist als die Dicke der Scheibe (11), lagern die Buchsen mit einem hier konischen Endstück ebenfalls passgenau in entsprechend geformte Vertiefungen oder Öffnungen in der unteren Scheibe (10). Dieser Aufbau ist nicht nur praktisch in Bezug auf die Zugänglichkeit sondern auch noch platz- und materialsparend. Überdies ist sie funktionell äußerst effektiv.
(b) zeigt einen 3D-Schnitt nunmehr von der gesamten Kupplung der beschriebenen Ausführungsform. Die obere Scheibe (11) ist fest mit einer hier als Rohr ausgebildeten Trägerstruktur verbunden. Die Scheibe weist eine Vielzahl von elastischen Buchsen (16) auf, die, wie beschrieben, in entsprechende Bohrungen in der Scheibe (11) versenkt sind. Im Abstand von 90° sind insgesamt vier (gezeigt nur drei) Paare von übereinander angeordneten Hydraulikfedern (12) und (13) in der Weise angebracht, wie oben beschrieben. Das scheibenförmige Bauteil (10) innerhalb der Trägerstruktur ist ebenfalls zu sehen, wie auch die Welle (2), bzw. deren die Führung, welche letztlich die axiale Kraft einleitet und überträgt.

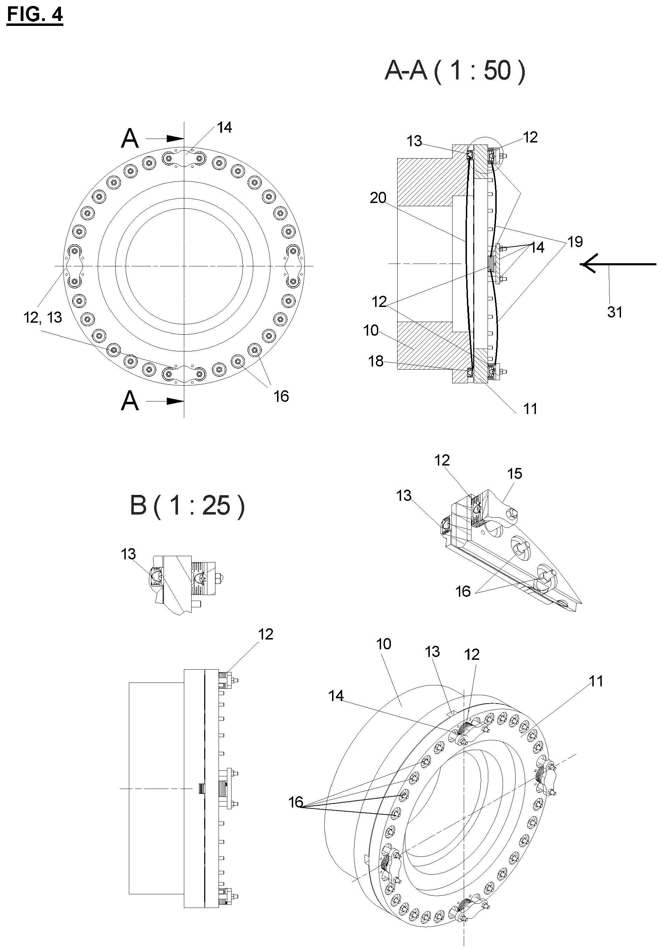

Fig. 4 zeigt verschiedene Ansichten und Details einer weiteren Ausführungsform der Erfindung, bei welcher insgesamt vier Paare von Hydraulikfedern (12) und (13) vorgesehen sind (linkes oberes Bild). Hierbei sind die Hydraulikfedern (12) mittels separater Verbindungs- und Spannelementen versehen. Die Spannelemente können alternativ auch durch separate Bohrungen geführt werden, welche nicht identisch mit den Spannelementen für die elastischen Buchsen sind.

Ferner sind bei dieser Ausführungsform die für die Entlastung des Systems zuständigen Hydraulikfedern (13) deutlich kleiner gewählt, womit kleinere axiale Kräfte aufgenommen werden. Dies bietet sich für die Fälle an, wenn die Zugkräfte (26) kleiner sind als die Druckkräfte (25). Zudem sind diese kleineren Hydraulikfedern (13) im gezeigten Beispiel im Gegensatz zur Ausführungsform der Fig. 2 zwischen Kupplungsscheibe (11) und Kupplungsscheibe (10) angeordnet, während die für die Belastung zuständigen Hydraulikfedern (12) gegenüber aber auf der äußeren Seite der Kupplungsscheibe (11) angebracht sind.

Müssen die Hydraulikfedern (13) nur sehr geringe axiale Kräfte übertragen, so können sie prinzipiell auch durch konventionelle Elemente ohne Hydraulikfunktion ersetzt werden.

Im oberen rechten Bild, welches eine Schnitt (A-A) der erfindungsgemäßen Kupplung zeigt, gibt der Pfeil (31) die Richtung der einleitenden Kraft für dieses Beispiel an, beispielsweise durch den Rotorschub einer Windkraftanlage.

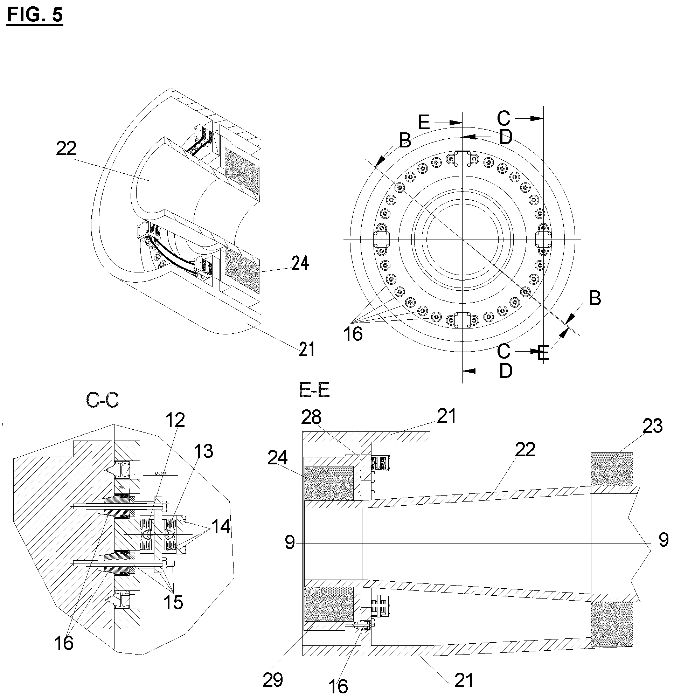

Fig. 5. zeigt verschiedene Ansichten und Details einer Anordnung einer erfindungsgemäßen Kupplung in einer Windkraftanlage, wie sie bereits in den Figuren 2 und 3 näher beschrieben wurde.

Das hier skizzierte Rotorlager (23) ist so ausgeführt, dass es nur radiale Kräfte übertragen kann. Die Rotorwelle (22) ist in diesem Beispiel axial frei und überträgt die vom Rotorschub erzeugten axial wirksamen Kräfte über ein Getriebeeingangslager (24) auf das feste Bauteil (11), welches wiederum mit dem Maschinenträger (21) verbunden ist. Damit wird das Getriebe also am Maschinenträger (21) über die oben beschriebenen Hydraulikelemente (12) und (13) axial festgehalten. Die Winkelbewegungen infolge Maschinenverbiegung (vertikale und horizontale Verschiebung der Bauteile (23) zu (24)) können mit relativ kleinen Rückstellkräften über ein Getriebegehäuse (29) auf den Maschinenträger (21) übertragen werden, wobei eine Bewegung im Spalt (28) erfolgt. Dabei entspricht das Getriebegehäuse (29) dem Maschinebauteil (10) und der Maschinenträger (21) dem festen Maschinenbauteil (11) der Figuren 2-4.

Aus diesem Beispiel ist es ersichtlich, dass die axialen Kräfte die vom Rotor initiiert werden, nicht oder nur zu einem geringen Anteil vom Rotorlager (23) übernommen werden müssen, sondern letztlich auf die hinteren Bauteile (10)(11)(29) und (21) verteilt werden. Dies führt zur Schonung von Material und zu einem sichereren Betrieb.

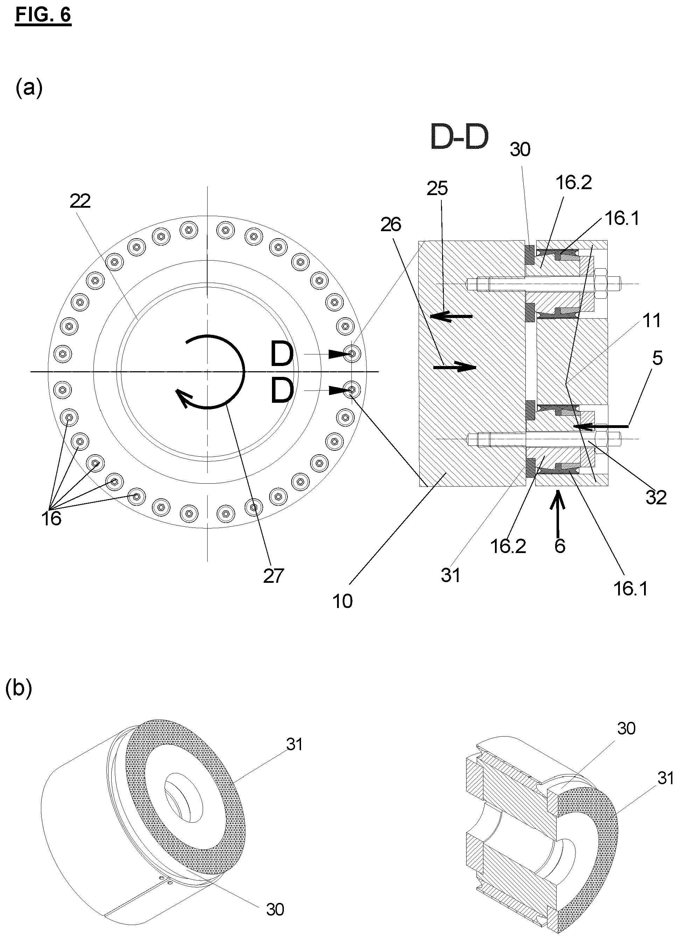

Fig. 6. Fig. 6(a) zeigt im rechten Bild einen vergrößerten Querschnitt von zwei benachbarten Buchsen (16), welche die Scheiben/Flansche (10)(11) der Ausführungsform der Fig. 2 miteinander verbinden (linkes Bild). Die erfindungsgemäßen Hydraulikfedern sind hier der besseren Übersicht wegen weggelassen worden.

Die konische Form der Buchsen-Enden aus Fig. 2 und der entsprechenden Aussparung in den Maschinenteilen ist durch eine zylindrische Form der Buchsen ersetzt worden. Die Scheibe (11) hat entsprechende zylindrische, während die Scheibe (10) keine Bohrung für die Fixierung der Buchsen (16) mehr aufweist. Die Verbindung zwischen den Maschinenteilen (10)(11) erfolgt mittels der Spannelemente (32) allein durch Reibungspressung.

Da bei Belastung eine Vielzahl von unterschiedlich gerichteten Kräften im Bereich zwischen Maschinenteil (10) und Buchsen (16) angreifen, ist es zweckmäßig, eine entsprechend dimensionierte Scheibe (30) zwischen der direkt auf dem Maschinenteil (10) aufsitzenden Buchse (16) vorzusehen, um durch die dadurch erreichte Flächenvergrößerung eine ausreichend hohe Flächenpressung zu übertragen.

In einer besonderen Ausführungsform weist die Scheibe (30) eine vorzugsweise einseitig beschichte Fläche auf, welche die Reibung signifikant erhöht, wodurch deutlich höhere Kräfte übertragen werden können (Fig. 6(b)). Beispielhaft kann die Scheibenfläche eine Schicht aus Diamantstaub aufweisen. Die nicht beschichtete Seite der Scheibe (30) kann durch z.B. durch einen Zapfen am Flansch gehalten werden.

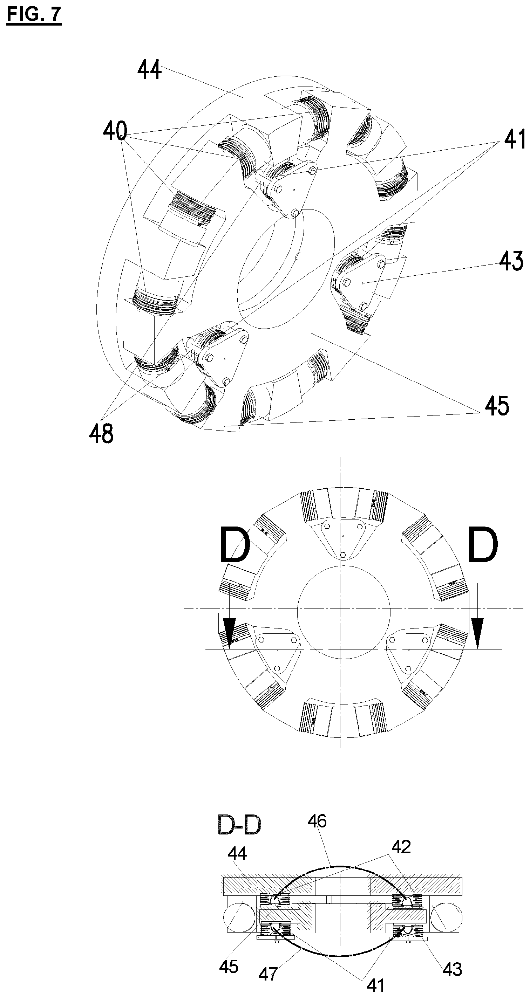

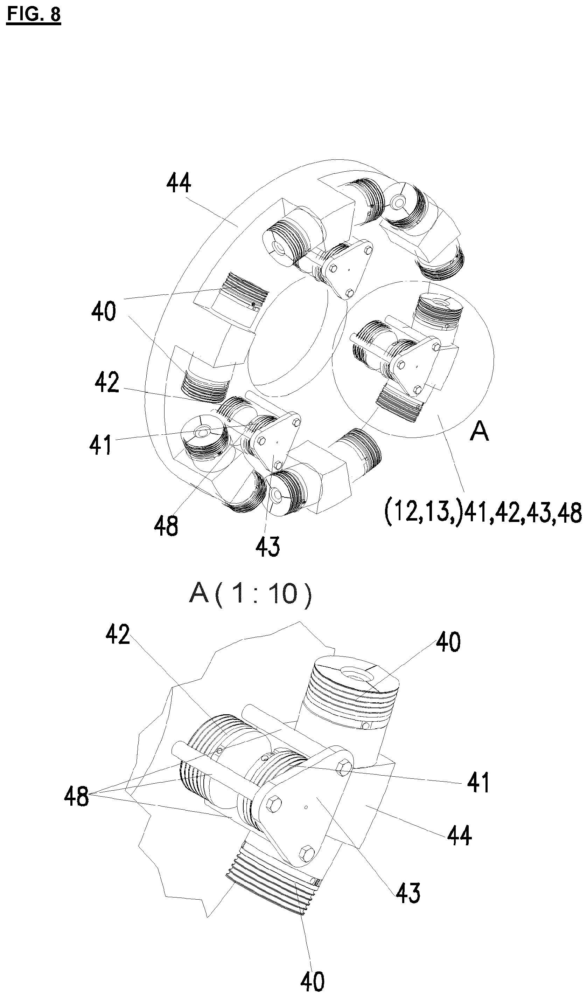

Fig. 7 und 8 zeigt den Einsatz der erfindungsgemäßen Hydraulikfedern bei einer typischen Paketkupplung des Standes der Technik. Eine derart ausgestattete Paketkupplung ist demnach ebenfalls Gegenstand der Erfindung.

Die gezeigte Paketkupplung umfasst einen Antriebsstern (44), einen Abtriebsstern (45) als Kupplungsscheiben sowie Paare von Elastomerelementen (40), welche zwischen den Nocken der beiden Bauteile angeordnet sind. Diese elastischen Elemente sind somit tangential ausgerichtet zur Übertragung der entsprechenden Kräfte.

Zwischen den Kupplungsscheiben (44) und (45) sind nunmehr in axialer Richtung gleichmäßig über den Umfang verteilt, zwei, drei oder mehr (im Beispiel: drei) Paare von übereinander angeordneten Hydraulik-Elastomerelementen (41)(42) vorhanden, welche den Elementen (12)(13) der vorigen Ausführungsformen entsprechen. Diese in Richtung der Achse (9) angebrachten elastischen Elemente sind über ein Joch (43) und die Bolzen (48) so vorgespannt, dass die beiden Kupplungsscheiben (44)(45) gegeneinander verspannt sind. Dabei sind alle der Antriebsseite (44) zugewandten Hydraulik-Elastomerelemente (42) mit Hydraulikleitungen (46) verbunden, während die außerhalb der Abtriebsscheibe (45) angeordneten Hydraulik-Elastomerelemente (41) mit Hydraulikleitungen (47) verbunden sind.

In der gezeigten Ausführungsform ist das Hydraulik-Elastomerelement (42) zwischen der Antriebsscheibe (44) und der Abtriebsscheibe (45) positioniert, während das Element (41) auf der Außenseite der Abtriebsscheibe (45) angeordnet ist. Wie bereits oben für die Buchsen-Kupplung beschrieben, ist es auch möglich, beide Elemente (41)(42) anders anzubringen, beispielsweise außerhalb der Kupplungsscheiben oder auch nebeneinander anstelle übereinander.

Fig. 7 zeigt eine solche Paketkupplung perspektivisch (oben), in der Draufsicht (mittig) sowie im Querschnitt (unten). Insgesamt sind sechs Paare von tangential angeordneten Elastomerelementen (40) gleichmäßig am Umfang der Antriebsscheibe (44) angebracht. Drei Paare von axial angeordneten Hydraulik-Elastomerelementen (41)(42) sind ebenfalls gleichmäßig auf einem kleineren Radius verteilt, wobei die Elemente (42) zwischen den Kupplungsscheiben und die Elemente (41) an der Außenseite der Abtriebsscheibe (45) übereinander angeordnet sind.

Fig. 8 : Die obere Abbildung zeigt eine weitere perspektivische Ansicht einer erfindungsgemäßen Paketkupplung mit einer hervorgehobenen Detailansicht eines Teilbereiches. Die Anordnung entspricht der Fig. 7. Die Abtriebsscheibe (45) ist der der besseren Übersicht wegen weggelassen. Am Umfang eines kleineren Radius der Kupplungsscheiben sind ebenfalls gleichmäßig verteilt, drei axial ausgerichtete Paare von übereinander angeordneten Hydraulik-Elastomerelementen (41)(42) inklusive Befestigungsmittel (43)(48) angebracht.

Die untere Abbildung er Fig. 8 zeigt eine vergrößerte Darstellung der verschiedenen unterschiedlich ausgestatten und angeordneten Federelemente (40)(41)(42).

## Patentansprüche

1. Kupplung zur Übertragung von Drehmomenten und hohen axialen Kräften mit hoher Torsionssteifigkeit und gleichzeitig geringer kardanischen Steifigkeit umfassend ein erstes als Scheibe oder als rotationssymmetrischer Flansch ausgebildetes Maschinenbauteil (10)(44), auf welches eine von außen eingeleitete Kraft und/oder ein Drehmoment einwirkt, und ein zweites feststehendes als Scheibe oder als rotationssymmetrischer Flansch ausgebildete Maschinenbauteil (11)(45), auf welches die Kraft und/oder das Drehmoment aus dem Maschinenbauteil (10)(44) übertragen wird, wobei die beiden Maschinenbauteile gegenüber und rotationssymmetrisch bezüglich einer gedachten gemeinsamen Achse (9) angeordnet sind und durch eine Vielzahl von am Umfang verteilten Federelementen (1) und Hydraulikfedern elastisch miteinander in Verbindung stehen und gegeneinander verspannt sind,
**dadurch gekennzeichnet, dass**
(a) die Federelemente (1) in Form von elastischen Buchsen (16) vorliegen, welche so an oder auf den Maschinenbauteilen (10)(11) angeordnet und gestaltet sind, dass deren Längsachse parallel zur gemeinsamen Achse (9) ist, und eine radiale Steifigkeit aufweisen, welche mindestens um den Faktor 10 höher ist als in axialer Richtung, und
(b) die Hydraulikfedern in Form von zwei oder mehr Paaren von ersten Hydraulikfedern (12)(42) und zweiten Hydraulikfedern (13(41) vorliegen, wobei
(i) die ersten Hydraulikfedern (12)(42) jeden Paares so angeordnet und mindestens mit dem ersten Maschinenbauteil (10)(44) mittels Verbindungs- und Spannmitteln (15)(48) funktionell so verbunden sind, dass sie eine axiale Zugkraft (26) auf das erste Maschinenbauteil (10)(44) in Bezug auf das zweite Maschinenbauteil (11)(45) ausüben bzw. übertragen, und
(ii) die zweiten Hydraulikfedern (13)(41) jeden Paares so angeordnet und mindestens mit dem Maschinenbauteil (11)(45) mittels Verbindungs- und Spannmitteln (14)(48) funktionell so verbunden sind, dass sie eine axiale Druckkraft (25) auf das Maschinenbauteil (10)(44) in Bezug auf das Maschinenbauteil (11)(45) ausüben bzw. übertragen.

2. Kupplung nach Anspruch 1, **dadurch gekennzeichnet, dass** die Paare von ersten Hydraulikfedern (12)(42) und die zweiten Hydraulikfedern (13)(41) gleichmäßig verteilt auf ein und demselben Maschinenbauteil (10)(44) oder (11)(45) angeordnet und mit den Maschinenbauteilen verspannt sind.

3. Kupplung nach Anspruch 1 oder 2, **dadurch gekennzeichnet, dass** die ersten Hydraulikfedern (12)(42) und die zweiten Hydraulikfedern (13)(41) eines jeden Paares übereinander auf dem entsprechenden Maschinenbauteil angeordnet sind.

4. Kupplung nach einem der Ansprüche 1 - 3, **dadurch gekennzeichnet, dass** die ersten und zweiten Hydraulikfedern (12)(13)(42)(41) eines jeden Paares elastische Schichtfederelemente aufweisen, deren Schichtflächen in Richtung der Druck-/Zug-Belastung / Entlastung (25)(26) oder der Achse (9) ausgerichtet sind und durch die Hydraulik gespannt oder entspannt werden können.

5. Kupplung nach einem der Ansprüche 1 - 4, **dadurch gekennzeichnet, dass** die ersten Hydraulikfedern (12)(42) durch Hydraulikleitungen (20)(46) und die zweiten Hydraulikfedern (13)(41) durch Hydraulikleitungen (19)(47) verbunden sind.

6. Kupplung nach einem der Ansprüche 1 - 5, **dadurch gekennzeichnet, dass** die Buchsen (16) vollständig in zylindrisch und/oder konisch geformte axiale Bohrungen oder Vertiefungen in eines der beiden oder beiden Maschinenbauteilen (10)(11) aufgenommen sind.

7. Kupplung nach Anspruch 6, **dadurch gekennzeichnet, dass** die Buchsen (16) mit einem Ende in Bohrungen eines der beiden Scheiben oder Flansche (10)(11) aufgenommen sind, und mit dem anderen Ende
(a) in eine zylindrische oder konische Bohrung oder Vertiefung (17) des anderen betreffenden gegenüberliegenden Maschinenteils (11)(10) versenkt sind, oder
(b) an eine Kontaktfläche des anderen gegenüberliegenden Maschineteils gepresst und verspannt sind.

8. Kupplung nach einem der Ansprüche 1 - 7, **dadurch gekennzeichnet, dass** die ersten oder zweiten Hydraulikfedern (12)(13) mit den Maschinenbauteilen (10) oder (11) über die gleichen axialen Bohrungen wie die elastischen Buchsen (16) verspannt werden.

9. Kupplung nach einem der Ansprüche 1 - 8, **dadurch gekennzeichnet, dass** die Maschinenteile (10)(11)(44)(45) eine zentrale Bohrung oder Öffnung aufweisen zur Aufnahme und / oder Durchführung einer Welle (22), über die axiale Kräfte eingeleitet werden.

10. Triebstrang für eine Windkraftanlage mit Rotorwelle (22), Rotorlager (23), Getriebelager (24), Getriebegehäuse (29) und Maschinenträger (21), **dadurch gekennzeichnet, dass** er eine Kupplung nach einem der Ansprüche 1 - 9 aufweist.

11. Triebstrang nach Anspruch 10, **dadurch gekennzeichnet, dass** die Kupplung im Bereich des Getriebelagers (24) angeordnet ist, wobei das erste Maschinenbauteil (10)(44) mit dem Getriebegehäuse (29) und das zweite Maschinenbauteil (11)(45) mit dem Maschinenträger (21) verbunden ist.

12. Windkraftanlage umfassend Turm, Gondel, Rotor, Getriebe und Generator, **dadurch gekennzeichnet, dass** sie einen Triebstrang nach Anspruch 10 oder 11_aufweist.

## Claims

1. A coupling for transmitting torques and high axial forces with high torsional rigidity and simultaneously low cardanic rigidity, comprising a first machine component (10)(44) which is designed as a disk or as a rotationally symmetrical flange and on which a force introduced from the outside and/or a torque acts, and a second fixed machine component (11)(45) which is designed as a disk or as a rotationally symmetrical flange and to which the force and/or the torque is transmitted from the machine component (10)(44), the two machine components being arranged oppositely and rotationally symmetrically with respect to an imaginary common axis (9) and, by means of a plurality of spring elements (1) distributed on the circumference and hydraulic springs, being elastically connected to one another and clamped against each other,
**characterized in that**
(a) the spring elements (1) are in the form of elastic bushings (16) which are arranged at or on the machine components (10)(11) and designed in such a way that the longitudinal axis thereof is parallel to the common axis (9), and have a radial rigidity which is higher by at least a factor of 10 than in the axial direction, and
(b) the hydraulic springs are in the form of two or more pairs of first hydraulic springs (12)(42) and second hydraulic springs (13(41), wherein
(i) the first hydraulic springs (12)(42) of each pair are arranged and functionally connected at least to the first machine component (10)(44) by means of connecting and clamping means (15)(48) such that they exert or transmit an axial tensile force (26) on or to the first machine component (10)(44) with respect to the second machine component (11)(45), and
(ii) the second hydraulic springs (13)(41) of each pair are arranged and functionally connected at least to the machine component (11)(45) by means of connecting and clamping means (14)(48) such that they exert or transmit an axial compressive force (25) on or to the machine component (10)(44) with respect to the machine component (11)(45).

2. The coupling according to claim 1, **characterized in that** the pairs of first hydraulic springs (12)(42) and the second hydraulic springs (13)(41) are arranged so as to be uniformly distributed on the same machine component (10)(44) or (11)(45) and are clamped to the machine components.

3. The coupling according to claim 1 or 2, **characterized in that** the first hydraulic springs (12)(42) and the second hydraulic springs (13)(41) of each pair are arranged one above the other on the corresponding machine component.

4. The coupling according to any of claims 1 - 3, **characterized in that** the first and second hydraulic springs (12)(13)(42)(41) of each pair have elastic layer spring elements, the layer surfaces of which are oriented in the direction of the compressive/tensile load/relief (25)(26) or the axis (9) and can be loaded or relieved by the hydraulic system.

5. The coupling according to any of claims 1 - 4, **characterized in that** the first hydraulic springs (12)(42) are connected by hydraulic lines (20)(46) and the second hydraulic springs (13)(41) are connected by hydraulic lines (19)(47).

6. The coupling according to any of claims 1 - 5, **characterized in that** the bushings (16) are accommodated completely in cylindrically and/or conically shaped axial bores or depressions in one of the two or in both machine components (10)(11).

7. The coupling according to claim 6, **characterized in that** the bushings (16) are received at one end in bores of one of the two disks or flanges (10)(11) and, at the other end,
(a) are countersunk into a cylindrical or conical bore or depression (17) in the other, relevant, opposite machine part (11)(10), or
(b) are pressed and clamped against a contact surface of the other, opposite machine part.

8. The coupling according to any of claims 1 - 7, **characterized in that** the first or second hydraulic springs (12)(13) are clamped to the machine components (10) or (11) via the same axial bores as the elastic bushings (16).

9. The coupling according to any of claims 1 - 8, **characterized in that** the machine parts (10)(11)(44)(45) have a central bore or opening for receiving a shaft (22) and/or for the passage of said shaft, via which shaft axial forces are introduced.

10. A drive train for a wind turbine having a rotor shaft (22), rotor bearing (23), transmission bearing (24), transmission housing (29) and machine frame (21), **characterized in that** said drive train has a coupling according to any of claims 1 - 9.

11. The drive train according to claim 10, **characterized in that** the coupling is arranged in the region of the transmission bearing (24), the first machine component (10)(44) being connected to the transmission housing (29) and the second machine component (11)(45) being connected to the machine frame (21).

12. A wind turbine comprising tower, nacelle, rotor, transmission and generator, **characterized in that** said wind turbine comprises a drive train according to claim 10 or 11.

## Revendications

1. Accouplement pour la transmission de couples de rotation et de forces axiales élevées avec une grande rigidité en torsion et en même temps une faible rigidité à la Cardan, comprenant un premier composant machine (10)(44) réalisé sous forme de bride à symétrie de révolution ou de disque, sur lequel agit une force et/ou un couple de rotation introduits depuis l'extérieur, et un second composant machine (11)(45) fixe réalisé sous forme de bride à symétrie de révolution ou de disque, sur lequel la force et/ou le couple de rotation sont transmis à partir du composant machine (10)(44), dans lequel les deux composants machine sont disposés en face l'un de l'autre et à symétrie de révolution par rapport à un axe commun (9) imaginaire et sont élastiquement en communication l'un avec l'autre et serrés l'un contre l'autre par une pluralité d'éléments élastiques (1) et de ressorts hydrauliques répartis sur la circonférence,
**caractérisé en ce que**
(a) les éléments élastiques (1) se présentent sous la forme de douilles (16) élastiques qui sont disposées et conçues sur les composants machine (10)(11) ou au niveau de ceux-ci de sorte que leur axe longitudinal est parallèle à l'axe commun (9) et présentent une rigidité radiale qui est supérieure d'au moins un facteur 10 que dans la direction axiale, et
(b) les ressorts hydrauliques se présentent sous la forme de deux paires ou plus de premiers ressorts hydrauliques (12)(42) et de seconds ressorts hydrauliques (13)(41), dans lequel
(i) les premiers ressorts hydrauliques (12)(42) de chaque paire sont disposés et reliés fonctionnellement au moins au premier composant machine (10)(44) au moyen de moyens de liaison et de serrage (15)(48) de sorte qu'ils exercent ou transmettent une force de traction (26) axiale sur le premier composant machine (10)(44) par rapport au second composant machine (11)(45), et
(ii) les seconds ressorts hydrauliques (13)(41) de chaque paire sont disposés et reliés fonctionnellement au moins au composant machine (11)(45) au moyen de moyens de liaison et de serrage (14)(48) de sorte qu'ils exercent ou transmettent une force de compression (25) axiale sur le composant machine (10)(44) par rapport au composant machine (11)(45).

2. Accouplement selon la revendication 1, **caractérisé en ce que** les paires de premiers ressorts hydrauliques (12)(42) et les seconds ressorts hydrauliques (13)(41) sont répartis uniformément sur un seul et même composant machine (10)(44) ou (11)(45) et sont serrés avec les composants machine.

3. Accouplement selon la revendication 1 ou 2, **caractérisé en ce que** les premiers ressorts hydrauliques (12)(42) et les seconds ressorts hydrauliques (13)(41) de chaque paire sont disposés les uns sur les autres sur le composant machine correspondant.

4. Accouplement selon l'une des revendications 1 à 3,
**caractérisé en ce que** les premiers et seconds ressorts
hydrauliques (12)(13)(42)(41) de chaque paire présentent des éléments de ressort stratifiés élastiques dont les surfaces stratifiées sont orientées en direction de la charge/décharge de compression/traction (25)(26) ou de l'axe (9) et peuvent être tendues ou détendues par le système hydraulique.

5. Accouplement selon l'une des revendications 1 à 4,
**caractérisé en ce que** les premiers ressorts hydrauliques (12)(42) sont reliés par des conduites hydrauliques (20)(46) et les seconds ressorts hydrauliques (13)(41) sont reliés par des conduites hydrauliques (19)(47).

6. Accouplement selon l'une des revendications 1 à 5,
**caractérisé en ce que** les douilles (16) sont entièrement logées dans des alésages ou des évidements axiaux de forme cylindrique et/ou conique dans l'un des deux composants machine (10)(11) ou les deux.

7. Accouplement selon la revendication 6, **caractérisé en ce que** les douilles (16), par une extrémité, sont logées dans des alésages de l'un des deux disques ou brides (10)(11), et, par l'autre extrémité,
(a) sont enfoncées dans un alésage ou un évidement (17) cylindrique ou conique de l'autre partie machine (11)(10) opposée concernée, ou
(b) sont pressées et serrées contre une surface de contact de l'autre partie machine opposée.

8. Accouplement selon l'une des revendications 1 à 7,
**caractérisé en ce que** les premiers ou seconds ressorts hydrauliques (12)(13) sont serrés avec les composants machine (10) ou (11) par l'intermédiaire des mêmes alésages axiaux que les douilles (16) élastiques.

9. Accouplement selon l'une des revendications 1 à 8,
**caractérisé en ce que** les parties machine (10)(11)(44)(45) présentent un alésage ou une ouverture centrale pour le logement et/ou le passage d'un arbre (22), par l'intermédiaire duquel des forces axiales sont introduites.

10. Organes d'entraînement pour une éolienne comportant un arbre de rotor (22), un palier de rotor (23), un palier de transmission (24), un boîtier de transmission (29) et un support de machine (21), **caractérisés en ce qu'**ils présentent un accouplement selon l'une des revendications 1 à 9.

11. Organes d'entraînement selon la revendication 10, **caractérisés en ce que** l'accouplement est disposé dans la zone du palier de transmission (24), dans lesquels le premier composant machine (10)(44) est relié au boîtier de transmission (29) et le second composant machine (11)(45) est relié au support de machine (21).

12. Éolienne comprenant un mât, une nacelle, un rotor, une transmission et un générateur, **caractérisée en ce qu'**elle présente des organes d'entraînement selon la revendication 10 ou 11.
